# EUROPÄISCHE PATENTSCHRIFT

(11) **EP 3 931 825 B1**
(45) Veröffentlichungstag und Bekanntmachung des Hinweises auf die Patenterteilung: **03.04.2024**
(21) Anmeldenummer: 20721467.7
(22) Anmeldetag: 17.04.2020
(51) Int. Cl.: G10L 15/22, B60R 15/04, B61D 35/00

(54) **SPRACHSTEUERUNG IM SANITÄRBEREICH**
VOICE CONTROL IN SANITARY AREAS
COMMANDE VOCALE DANS LE DOMAINE DU SANITAIRE

(30) Priorität: 18.04.2019 DE 102019205721; 18.04.2019 DE 102019205719
(43) Veröffentlichungstag der Anmeldung: 05.01.2022
(73) Patentinhaber: Siemens Mobility GmbH, 81739 München (DE)
(72) Erfinder: KEMPER, Florian, 46359 Heiden (DE); KÜBECK, Thomas, 47929 Grefrath (DE); WOLLNY, Steffen, 90491 Nürnberg (DE)
(74) Vertreter: Siemens Patent Attorneys
(86) Internationale Anmeldenummer: PCT/EP2020/060799
(87) Internationale Veröffentlichungsnummer: WO 2020/212544

(56) Entgegenhaltungen:
- DE-A1- 4 233 551
- US-B1- 6 478 221
- BILGE MUTLU ET AL: "Initial Interaction Concept for a Robotic Toilet System", HUMAN-ROBOT INTERACTION, 6. März 2017 (2017-03-06), Seiten 249-250, XP055696708, 2 Penn Plaza, Suite 701 New York NY 10121-0701 USA DOI: 10.1145/3029798.3038420 ISBN: 978-1-4503-4885-0

## Beschreibung

Die Erfindung betrifft ein Fahrzeug des öffentlichen Personenverkehrs mit einer Sanitärzelle mit wenigstens einer elektrisch oder elektronisch betätigbaren Einrichtung und wenigstens einem Mikrofon zur Erfassung von Sprachsignalen eines Benutzers, wobei das Fahrzeug wenigstens eine Steuerungseinheit zur Verarbeitung von Mikrofonsignalen und zur Betätigung der Einrichtung in Abhängigkeit der Mikrofonsignale aufweist.

Sanitärzellen sind als Teil eines Gebäudes, einer Wohnung oder eines Fahrzeugs, in denen sanitäre Anlagen untergebracht sind, grundsätzlich bekannt.

Personen mit einer eingeschränkter Sehfähigkeit und Blinde haben häufig Probleme sich in einer unbekannten Umgebung zu orientieren. Insbesondere in hygienisch relevanten Umgebungen wie sanitären Anlagen kann diese erschwerte Orientierung die Unsicherheit der benannten Personen weiter verstärken.

Über erhabene Piktogramme oder Blindenschrift werden Personen mit eingeschränkter Sehfähigkeit über Position und Funktion einzelner Komponenten informiert. Problematisch hierbei ist jedoch die Tatsache, dass sehr viele Menschen Blindenschrift nicht lesen können.

Ein Trend geht daher zu berührungslosen Komponenten im Sanitärbereich. So sind bereits Seifenspender, Handtuchspender etc. bekannt geworden, die berührungslos zu bedienen sind, beispielsweise mittels Infrarot-Sensoren. Dies widerspricht jedoch der Notwendigkeit des Ertastens dieser Hinweise. Nicht alle Bedienelemente konnten bisher berührungslos gestaltet werden.

Viele nichtbehinderte Benutzer von Sanitäreinrichtungen präferieren ebenfalls eine berührungslose Bedienung der Sanitärzelle (WC Tür, Türverriegelung, Spülung, Händewaschen etc.).

Die DE4233551A1 zeigt ein Fahrzeug des öffentlichen Personenverkehrs mit einer Sanitärzelle.

Die US 2019/0086890 A1 zeigt eine Sanitärzelle mit wenigstens einer elektrisch oder elektronisch betätigbaren Einrichtung und wenigstens einem Mikrofon zur Erfassung von Sprachsignalen eines Benutzers. Die erfassten Sprachsignale werden zu einem cloudbasierten Sprachmodul übermittelt und zentral ausgewertet. Identifizierte Steuerungsbefehle werden zurück übermittelt.

Der Aufsatz mit dem Titel "Initial Interaction Concept for a Robotic Toilet System" von Bilge Mutlu ET AL, Human-Robot Interaction, 6. März 2017 (2017-03-06), Seiten 249-250, XP055696708, lehrt ebenfalls die Sprachsteuerung einer Einrichtung einer Sanitärzelle.

Die KR 10 1 554 417 B1 lehrt wiederum die Sprachausgabe in einer Sanitärzelle.

US 6 478 221 B1 offenbart ein Selbstbedienungsterminal mit mehreren Lautsprechern, die bestimmten Funktionen zugeordnet sind und bei den entsprechenden Eingabemodulen zur Steuerung der Funktionen angeordnet sind. Durch akustische Signale aus einem, einem bestimmten Eingabemodul zugeordneten Lautsprecher, wird der Benutzer durch die Bedienung geführt.

Der Erfindung liegt die Aufgabe zugrunde, die Nutzbarkeit von Einrichtungen im Hygienebereich für Personen mit eingeschränkter Sehfähigkeit zu verbessern.

Gelöst wird die Aufgabe durch die Gegenstände der unabhängigen Patentansprüche 1 und 10. Weiterbildungen und Ausgestaltungen der Erfindung finden sich in den Merkmalen der abhängigen Patentansprüche wieder.

Ein erfindungsgemäßes Fahrzeug des öffentlichen Personenverkehrs, insbesondere ein Schienenfahrzeug, umfasst wenigstens eine Sanitärzelle, welche wenigstens eine elektrisch oder elektronisch betätigbare Einrichtung umfasst, wenigstens ein Mikrofon zur Erfassung von Sprachsignalen eines Benutzers und zur Wandlung dieses Sprachsignals in ein Mikrofonsignal sowie wenigstens eine Steuerungseinheit zur Verarbeitung des Mikrofonsignals und zur Betätigung der wenigstens einen Einrichtung in Abhängigkeit des Mikrofonsignals.

Als Einrichtungen werden technische Vorrichtungen oder Anlagen angesehen, wie z.B. eine Tür zur Sanitärzelle sowie eine Türverriegelung, eine Lichteinrichtung, eine Toilettenspüleinrichtung, eine Handwaschwassereinrichtung, eine Seifenspendeeinrichtung, eine Handtuch- bzw. Papierspendeeinrichtung, usw. Diese für Sanitärzellen üblichen Einrichtungen werden üblicherweise manuell betätigt, meist über berührempfindliche Taster oder aber, wie oben bereits beschrieben, berührungslos, beispielsweise mittels Infrarot-Sensoren. Dennoch ist eine Geste oder eine Annäherung an einen Sensor zur Betätigung notwendig. Auch mechanische Schalter oder Stellglieder können vorgesehen sein.

Die Einrichtungen werden durch den Benutzer betätigt, also entweder gesteuert oder geregelt. So kann ein Benutzer eine Toilettenspülung auslösen oder eine Handtuch- oder Seifenausgabe auslösen. Auch das Ein- oder Ausschalten des Lichts in der Sanitärzelle, das Öffnen und Schließen einer Tür und das Ver- und Entriegeln der Tür steuert der Benutzer. Ist ein klassischer Wasserhahn vorgesehen, lässt sich der Handwaschwasserfluss regeln sowie gegebenenfalls auch ein Mischungsverhältnis aus kaltem und warmem Wasser. Mechanische Schalter oder Stellglieder können zwar noch vorgesehen sein, werden aber elektrisch oder elektronisch betätigt. Erfindungsgemäß weist die Sanitärzelle wenigstens eine elektrisch oder elektronisch betätigbare Einrichtung auf. Es können aber mehrere dieser Einrichtungen vorgesehen sein und mittels der Steuerungseinheit in Abhängigkeit der Mikrofonsignale betätigt werden. Nachfolgend wird daher im Plural von Einrichtungen gesprochen.

Mittels des wenigstens einen Mikrofons, einem Schallwandler, der Luftschall als Schallwechseldruckschwingungen in entsprechende elektrische Spannungsänderungen als Mikrofonsignal umwandelt, werden so Sprachsignale eines Benutzers in Mikrofonsignale gewandelt. Auch hier wird nachfolgend der Plural von Mikrofonsignalen verwendet.

Die Steuerungseinheit dient zur Verarbeitung von Mikrofonsignalen und zu deren Umsetzung in Steuerungsbefehle zur Betätigung der Einrichtungen in Abhängigkeit der Mikrofonsignale. Sie ist entsprechend geeignet ausgebildet.

Die Steuerungseinheit weist darüber hinaus ein Spracherkennungsmodul zur Auswertung der Mikrofonsignale im Hinblick auf Sprachbefehle des Benutzers auf. Das Spracherkennungsmodul ist geeignet ausgebildet, die Mikrofonsignale auszuwerten und Sprachbefehle des Benutzers zu identifizieren.

Anhand der Mikrofonsignale werden somit Sprachbefehle zur Betätigung der Einrichtungen erkannt und in entsprechende Befehle zur Betätigung der Einrichtungen umgewandelt und an die Einrichtungen, insbesondere an entsprechende Aktoren der Einrichtungen, übermittelt. Die Einrichtungen werden entsprechend in Abhängigkeit der erkannten Sprachbefehle des Benutzers betätigt.

Dazu kann das Spracherkennungsmodul eine lokale Datenbank aufweisen, um Sprachbefehle des Benutzers mit in der Datenbank gespeicherten Informationen zu vergleichen. Das Fahrzeug ist insbesondere frei von einer Kommunikationseinrichtung zur Übermittlung der Mikrofonsignale an ein landseitig angeordnetes Spracherkennungsmodul oder zur Übermittlung von identifizierten Sprachbefehlen an eine landseitig angeordnete Datenbank zum Vergleich von identifizierten Sprachbefehlen des Benutzers mit in der entfernten Datenbank gespeicherten Informationen.

Somit ist eine Sprachsteuerung der Einrichtungen der Sanitärzelle für Personen mit eingeschränkter Sehfähigkeit sowie für alle anderen Benutzer ermöglicht. Durch eines oder mehrere kleine Mikrofone kann der Benutzer einzelne Funktionen gezielt über Sprachbefehle aktivieren. Zusätzlich kann der Benutzer auch Informationen zu Positionen, Funktionen und Zuständen der einzelnen Komponenten im Innenraum der Sanitärzelle abfragen. Für diese Aktionen ist kein physischer Kontakt zu den Komponenten im Innenraum notwendig.

Darüber hinaus weist die Sanitärzelle erfindungsgemäß mehrere Lautsprecher zur Ausgabe von Informationen an den Benutzer auf, wobei jeweils wenigstens ein Lautsprecher einer betätigbaren Einrichtung zugeordnet ist, wobei die Steuerungseinheit zur Ansteuerung der Lautsprecher und damit geeignet ausgebildet ist, die Lautsprecher zur Ausgabe voneinander verschiedener akustischer Signale zur Leitung des Benutzers in der Sanitärzelle anzusteuern, wobei die Steuerungseinheit geeignet ausgebildet ist, die Lausprecher derart anzusteuern, dass vorgegebene akustische Signale zur Leitung des Benutzers in der Sanitärzelle ausschließlich von dem wenigstens einen Lautsprecher ausgegeben werden. Dies geschieht vorteilhaft in Form von Sprache (Sprachausgabe). Die Sanitärzelle kann so dem Benutzer nicht nur Rückmeldungen über den Status der Einrichtungen geben, sondern auch vorgegebene Informationen zur Leitung des Benutzers in der Sanitärzelle ausgeben. Sobald ein Aktivierungsbefehl oder eine Information dem Nutzerbefehl entspricht, kann die entsprechende Funktion der Einrichtung aktiviert werden und eine gewünschte Information über die Sprachausgabe ausgegeben werden. So kann beispielsweise eine Rückmeldung über eine sich schließende oder sich öffnende Tür ausgegeben werden oder, dass in einem bestimmten Zeitfenster die Seifenausgabe aktiviert ist. Eine sehr einfache Information kann beispielsweise auch darin bestehen, dem Benutzer die Möglichkeit der Sprachsteuerung zu signalisieren, beispielsweise ausgelöst durch eine sich von außen öffnende Tür, einen eintretenden oder sich von außen der Sanitärzelle nähernden Benutzer. Entsprechend geeignete Sensorik ist dann vorzusehen und mit der Steuerungseinheit zu koppeln. Auch die betätigbaren Einrichtungen der Sanitärzelle als solche können Sensoren aufweisen, um beispielsweise Rückmeldungen über ihren Status der Steuerungseinheit zurückzumelden. Die Sanitärzelle kann somit dem Benutzer wichtige Hinweise zum Gebrauch der Sanitärzelle und ihrer Einrichtungen geben.

Die Lautsprecher können allgemein geeignet ausgebildet sein zur Sprachausgabe, beispielsweise zur Ausgabe von Rückmeldungen über den Status der Einrichtungen oder auch zur Ausgabe vorgegebener Informationen an den Benutzer.

Jeweils wenigstens ein Lautsprecher ist gemäß einer Ausführungsform auch in unmittelbarer Umgebung der betätigbaren Einrichtung angeordnet ist, der er zugeordnet ist. Die Steuerungseinheit ist weitergebildet geeignet ausgebildet, die Lausprecher derart anzusteuern, dass vorgegebene akustische Signale zur Leitung des Benutzers in der Sanitärzelle ausschließlich von dem wenigstens einen Lautsprecher ausgegeben werden, welcher einer zu betätigenden Einrichtung zugeordnet und in deren unmittelbarer Umgebung der wenigstens eine Lautsprecher angeordnet ist, zu deren Betätigung der Benutzer (an)geleitet werden soll.

Eine weitere Weiterbildung sieht vor, dass Steuerungseinheit ausgebildet aus, Informationen in Abhängigkeit einer, beispielsweise ermittelten, Position des Benutzers in der Sanitärzelle und/oder in Abhängigkeit einer, insbesondere unmittelbar oder zuletzt, erfolgten Betätigung einer Einrichtung der Sanitärzelle auszugeben. Die Informationen werden wiederum insbesondere in Form von Sprachausgaben mittels der Lautsprecher an den Benutzer gegeben.

So kann aus der Position des Benutzers im Raum und/oder der letzten ausgeführten Funktion der Sanitärzelle, die er benutzte eine aktive Benutzerführung initiiert werden, so dass gerade sehbehinderte Personen sprachgeführt durch die Zelle navigiert werden.

Weitergebildet kann die Steuerungseinheit ausgebildet sein, insbesondere bei einem Erkennen der Existenz eines Benutzers, Fragen an den Benutzer auszugeben, um Sprachsignale des Benutzers zu provozieren. Hierbei ist durch aktive Abfrage der Bedürfnisse des Benutzers eine individuelle Kommunikation für sehbehinderte und nichtbehinderte Personen verfügbar.

So lässt sich die Sanitärzelle und ihre Einrichtungen nicht nur passiv durch den Benutzer mittels Sprache steuern. Die Sanitärzelle kann vielmehr dem Benutzer wichtige Hinweise zum Gebrauch der Sanitärzelle und ihrer Einrichtungen geben.

Gemäß einer weiteren Weiterbildung der Erfindung sind mehrere Mikrofone vorgesehen. Die Steuerungseinheit kann dann geeignet ausgebildet sein zur Positionsbestimmung des Benutzers in der Sanitärzelle anhand der Mikrofonsignale, insbesondere mittels Laufzeitdifferenzen zwischen den verschiedenen Mikrofonsignalen der voneinander verschiedenen, mehreren Mikrofonen.

Anhand der Positionsbestimmung des Benutzers durch die Auswertung mehrerer Mikrofonsignale kann eine Benutzerführung weiter verfeinert werden.

Eine weitere Weiterbildung ist darin zu sehen, dass die Mikrofone und/oder die Lautsprecher für den Benutzer verdeckt angeordnet sind. Mikrofon(e) und/oder Lautsprecher sind nicht nur versteckt bzw. unsichtbar, sondern insbesondere nicht frei zugänglich und somit vor Vandalismus geschützt in der Sanitärzelle angeordnet.

Weitergebildet weist jede betätigbare Einrichtung eine Betätigungsvorrichtung zur Betätigung der jeweiligen Einrichtung, wie z.B. ein Taster zur Betätigung der Einrichtung, auf. Der wenigstens eine, der Einrichtung zugeordnete Lautsprecher kann dann gar in unmittelbarer Umgebung der Betätigungsvorrichtung der Einrichtung angeordnet sein und somit durch Ausgabe akustischer Signale weitere akustische Orientierungshilfe bieten.

Mittels der verschiedenen akustischen Signale wird der Benutzer in der Sanitärzelle geleitet bzw. geführt. Es kann von einer akustischen Führung gesprochen werden.

Wie bereits ausgeführt, dient die Steuerungseinheit der Ansteuerung der Lautsprecher zur Ausgabe der akustischen Signale. Sie ist entsprechend geeignet ausgebildet, elektromagnetische Signale zur Anregung von Lautsprechern zu erzeugen und an die Lautsprecher weiterzuleiten.

Gemäß einer Weiterbildung der Erfindung weist die Steuerungseinheit eine Datenbank mit gespeicherten Handlungsempfehlungen für den Benutzer auf.

Die Steuerungseinheit ist entsprechend geeignet ausgebildet, die Lautsprecher zur Ausgabe von vorgegebenen Handlungsempfehlungen aus der Datenbank in Form von Sprache zur Leitung des Benutzers in der Sanitärzelle anzusteuern. Die akustischen Signale werden somit in Form von Sprachsignalen ausgegeben, welche die Handlungsempfehlungen aus der Datenbank widerspiegeln.

Weitergebildet ist die Steuerungseinheit geeignet ausgebildet zur Auswahl von vorgegebenen akustischen Signalen, insbesondere zur Auswahl der Handlungsempfehlungen aus der Datenbank, nach einem vorgegebenen Algorithmus. Die Ausgabe der akustischen Signale erfolgt somit nach dem vorgegebenen Algorithmus.

Der vorgegebene Algorithmus kann dabei eine feste, logische Abfolge in Form eines Ablaufplans sein abbilden.

Weitergebildet weist die Steuerungseinheit eine Zeitmesseinrichtung und/oder ein Empfangsmodul zum Empfang von Statusmeldungen der betätigbaren Einrichtungen auf und ist geeignet ausgebildet, die Auswahl vorgegebener akustischer Signale, insbesondere der Handlungsempfehlungen aus der Datenbank, nach dem vorgegebenen Algorithmus in Abhängigkeit einer vorgegebenen Zeitspanne und/oder in Abhängigkeit wenigstens einer Statusmeldung oder eines aktuellen Status einer der betätigbaren Einrichtungen vorzunehmen.

Ein akustisches Signal wird beispielsweise ausgelöst durch eine gerade erfolgte Betätigung und/oder eine vorgegebene, verstrichene Zeitspanne, beispielsweise bemessen ab einer bestimmten Betätigung.

Natürlich weist die Steuerungseinheit hierzu Eingänge zum Empfang der Statusmeldungen, insbesondere in Form von elektromagnetischen Signalen, der betätigbaren Einrichtungen auf. Diese können beispielsweise auch nur gesendet werden, wenn eine Betätigung erfolgte. Dann würde es sich um die Rückmeldung eines sich geänderten Status handeln. Zur Auslösung eines vorgegebenen akustischen Signals in Abhängigkeit der aktuellen Status der Einrichtungen können diese in der Steuerungseinheit in einem Zwischenspeicher vorgehalten werden.

Die Steuerungseinheit dient gemäß dieser Ausprägung somit zur Verarbeitung von Statusmeldungen und zu deren Umsetzung in elektromagnetische Signale zur Ansteuerung der Lautsprecher zur Ausgabe voneinander verschiedener akustischer Signale zur Leitung des Benutzers in der Sanitärzelle. Neben Handlungsanweisungen, insbesondere zur Betätigung einer Einrichtung und/oder zur Position einer Einrichtung, können weitere, Informationen ausgegeben werden. So kann beispielsweise eine Rückmeldung über eine sich schließende oder sich öffnende Tür ausgegeben werden oder, dass in einem bestimmten Zeitfenster die Seifenausgabe aktiviert ist. Eine sehr einfache Information kann beispielsweise auch darin bestehen, dem Benutzer die Möglichkeit der Aktivierung oder Deaktivierung der Sprachausgabe zu signalisieren, beispielsweise ausgelöst durch eine sich von außen öffnende Tür, einen eintretenden oder sich von außen der Sanitärzelle nähernden Benutzer. Entsprechend geeignete Sensorik ist dann vorzusehen und mit der Steuerungseinheit zu koppeln.

Die Ausgabe der akustischen Signale kann weitergebildet vom Benutzer aktiviert oder deaktiviert werden, beispielsweise durch Druck auf einen vorgegebenen Taster oder durch einen entsprechenden Sprachbefehl des Benutzers.

Die Erfindung ist eine akustische Steuerungsmöglichkeit über Sprachbefehle. Sie ermöglicht kontaktloses orientieren und aktivieren aller Funktionen im Bereich der Sanitärzelle und dies, durch das Spracherkennungsmodul an Bord des Fahrzeugs, frei von einer Übermittlung von erfassten Mikrofonsignalen. Des Weiteren dient die Erfindung als akustische Orientierungsmöglichkeit für Benutzer mit eingeschränkter Sehkraft. Sie ermöglicht nicht nur die Ausgabe von akustischen Rückmeldungen über die Ausführung von sprachgesteuerten Funktionen, sondern ermöglicht ein kontaktloses Führen von Personen mit einer eingeschränkten Sehfähigkeit oder Blinden, Schritt für Schritt, vom Betreten bis zum Verlassen der "geführten" Sanitärzelle.

Ein erfindungsgemäßes Fahrzeug, insbesondere ein Schienenfahrzeug des Personenverkehrs ist hier als mobiles Verkehrsmittel zu sehen, umfassend Landfahrzeuge, beispielsweise Busse oder Bahnen, Luftfahrzeuge, insbesondere Flugzeuge, und Wasserfahrzeuge, insbesondere Schiffe.

Ein erfindungsgemäßes Verfahren zum Betreiben eines erfindungsgemäßen Fahrzeugs mit wenigstens einer Sanitärzelle umfasst wenigstens folgende Verfahrensschritte:
- Erfassen eines Sprachsignals eines Benutzers,
- Erkennen des Sprachsignals des Benutzers und umwandeln des Sprachsignals in einen Steuerungsbefehl für eine Einrichtung der Sanitärzellen mittels wenigstens einer geeignet ausgebildete Steuerungseinheit;
- Ausgeben des Steuerungsbefehls an die Einrichtung der Sanitärzelle; und
- Ausgeben wenigstens eines akustischen Signals zur Leitung des Benutzers in der Sanitärzelle.

Das Sprachsignal des Benutzers wird insbesondere durch wenigstens ein Mikrofon der Sanitärzelle aufgenommen und an eine Steuerungseinheit weitergeleitet. Dort wird das Sprachsignal verarbeitet, mittels eines Spracherkennungsmoduls ausgewertet, beispielsweise mit Informationen aus einer Datenbank verglichen, und somit als Sprachbefehl erkannt und diesen in einen Steuerungsbefehl für eine Einrichtung der Sanitärzelle umgewandelt.

Der Benutzer wird mittels ausgegebener Informationen geführt. Dazu werden Informationen erzeugt und über Lautsprecher akustisch ausgegeben, insbesondere in Form von Sprache. Die Informationen werden weitergebildet in Abhängigkeit von einer ermittelten Position des Benutzers in der Sanitärzelle und/oder in Abhängigkeit einer erfolgten Betätigung einer Einrichtung der Sanitärzelle ausgegeben. Darüber hinaus können Fragen an den Benutzer ausgegeben werden, um Sprachsignale des Benutzers zu provozieren.

Weitergebildet wird das wenigstens eine akustische Signal in Form von Sprache ausgegeben. Hierbei werden insbesondere Handlungsanweisungen in Form von Sprachsignalen zur Leitung des Benutzers in der Sanitärzelle ausgegeben.

Eine weitere Weiterbildung ist darin zu sehen, dass die akustischen Signale, insbesondere die Handlungsempfehlungen, nach einem vorgegebenen Algorithmus ausgewählt werden.

Gemäß einer weiteren Weiterbildung werden die akustischen Signale, insbesondere die Handlungsempfehlungen, nach dem vorgegebenen Algorithmus in Abhängigkeit von Abhängigkeit von einer vorgegebenen Zeitspanne und/oder in Abhängigkeit wenigstens einen aktuellen Status einer der betätigbaren Einrichtungen ausgewählt.

Mehrere Lautsprecher sind zur Ausgabe der akustischen Signale in der Sanitärzelle vorgesehen, wobei jeweils wenigstens ein Lautsprecher einer betätigbaren Einrichtung zugeordnet ist. Insbesondere sind die einer betätigbaren Einrichtung zugeordneten Lautsprecher auch in unmittelbarer Umgebung der betätigbaren Einrichtung angeordnet, insbesondere gar in unmittelbarer Umgebung einer Betätigungsvorrichtung der jeweiligen Einrichtung, wie z.B. ein Taster zur Betätigung der Einrichtung.

Die akustischen Signale zur Leitung des Benutzers in der Sanitärzelle werden ausschließlich von dem wenigstens einen Lautsprecher ausgegeben, welcher der zu betätigenden Einrichtung zugeordnet ist und gegebenenfalls in deren unmittelbarer Umgebung angeordnet ist, zu deren Betätigung der Benutzer geleitet werden soll.

Die Erfindung lässt zahlreiche Ausführungsformen zu. Sie wird anhand der nachfolgenden Figuren näher erläutert, in welchen jeweils ein Ausgestaltungsbeispiel dargestellt ist.

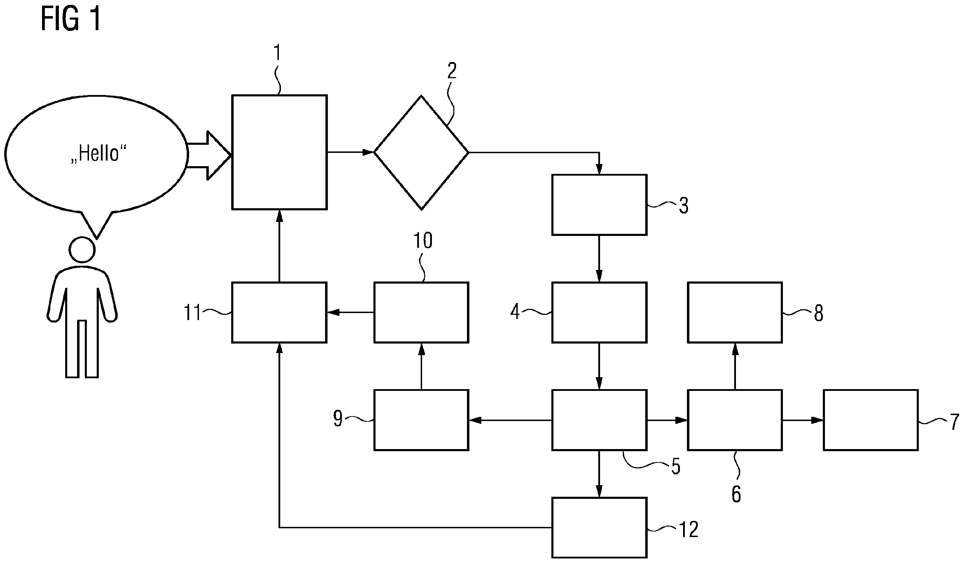

In der Figur 1 sind wesentliche logischen Schritte in der Verarbeitung der Sprachansage in einer Ausprägung der Erfindung in einem Flussdiagramm schematisch dargestellt.

Ein Benutzer spricht die Sanitärzelle an, beispielsweise mit einem vorgegebenen spezifischen Sprachbefehl "Hallo". Dadurch wird die Sprachsteuerung aktiviert. Alternativ kann ein Mikrofon und damit die Möglichkeit der Sprachsteuerung der Sanitärzelle durch einen Taster oder Sensor, z.B. ein Bewegungssensor, aktiviert werden. Dies ist der Start 1 der Sprachsteuerung.

Das Schallsignal wird anschließend in Schritt 2 in ein elektromagnetisches Signal (Mikrofonsignal) gewandelt und an eine Steuerungseinheit geleitet. In Schritt 3 folgt dann eine Spracherkennung durch eine Spracherkennungsmodul, üblicherweise eine Software. Es folgt eine Stichworterkennung 4 sowie ein Abgleich des Stichworts mit einer Datenbank 5.

Ergibt dieser Vergleich einen eindeutigen Treffer 6, wird die gewünschte Funktion einer Einrichtung aktiviert 7, beispielsweise das Handwaschwasser aktiviert oder ein Handtrockner aktiviert oder eine Tür entriegelt und geöffnet. Zusätzlich kann eine Sprachausgabe aus einem Datenspeicher 8 erfolgen, insbesondere über die aktivierte Funktion oder es können weitere Informationen ausgegeben werden.

Ist der Vergleich hingegen ergebnislos 9, erfolgt eine Fehlermeldung 10 und es kann eine Bitte um Wiederholung oder Spezifizierung 11 an den Benutzer ausgegeben werden. Dies erfolgt auch, wenn das Ergebnis des Vergleichs mehrdeutig oder nicht eindeutig 12 ist. Anschließend kann der Benutzer seine Anfrage widerholen oder konkretisieren und somit die Sprachsteuerung erneut bei 1 beginnen.

Die Sanitärzelle umfasst hierbei elektrisch oder elektronisch betätigbare Einrichtungen, Mikrofone zur Erfassung von Sprachsignalen von Benutzern und zur Wandlung dieser Sprachsignale in Mikrofonsignale sowie eine Steuerungseinheit zur Verarbeitung der Mikrofonsignale und zur Betätigung der Einrichtungen in Abhängigkeit der Mikrofonsignale. Die Mikrofone sind mit einem Spracherkennungsmodul gekoppelt. Die Sprachbefehle des Benutzers werden aufgenommen und ausgewertet, insbesondere werden sie mit einer Datenbank aller programmierten Informationen und Funktionen abgeglichen.

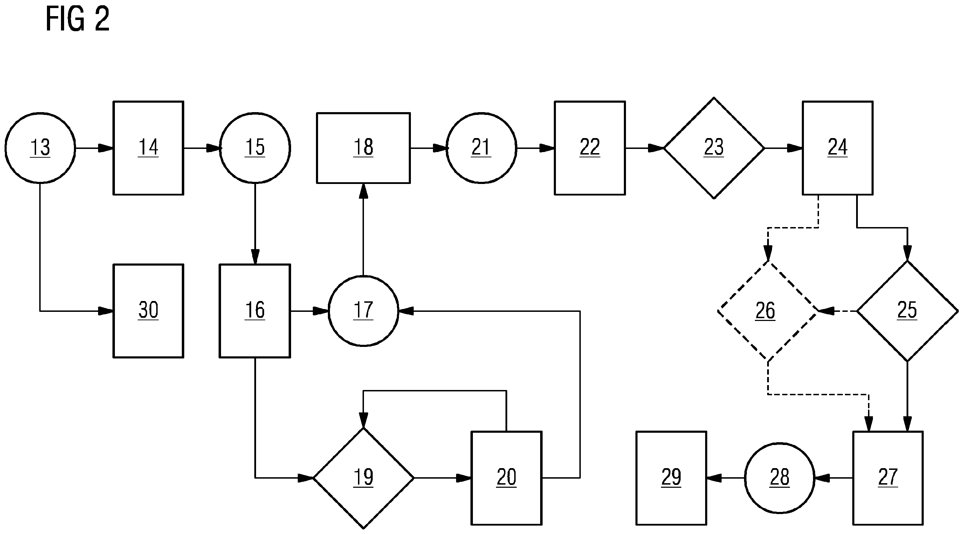

In der Figur 2 ist ein Flussdiagramm einer möglichen logischen Abfolge von Handlungsanweisungen in Form von Sprachansagen und betätigten Einrichtungen dargestellt.

Die Erfindung betrifft somit auch ein akustisches Leitsystem, insbesondere für Personen mit eingeschränkter Sehfähigkeit. Durch kleine Lautsprecher wird der Benutzer in einer logischen Abfolge über die Positionen, Funktionen und Zustände der einzelnen Komponenten im Innenraum informiert. Für diese Informationen ist kein physischer Kontakt zu den Einrichtungen und Komponenten im Innenraum notwendig. Um für uneingeschränkte Personen weiterhin einen unveränderten Normalbetrieb zu gewährleisten, wird dieser spezielle "Blindenmodus" bspw. über einen zusätzlichen, speziell gekennzeichneten Türtaster für eine Logikfolge oder, wie in Fig. 1 veranschaulicht, über die Sprachsteuerung aktiviert.

Hiermit beginnt auch die skizzierte Abfolge: bei Schritt 13 wird sie ausgelöst, beispielsweise durch einen auf der Außenseite der Sanitärzelle angeordneten Türtaster zum Öffnen der Tür oder durch einen entsprechenden Sprachbefehl. In Schritt 14 wird, bedingt durch eine mit dem Taster oder dem Sprachbefehl gekoppelte Öffnung der Tür zur Sanitärzelle, dieselbige geöffnet. Gleichzeitig kann aus wenigstens einem Lautsprecher der Sanitärzelle - gesteuert durch die Steuerungseinheit - eine Begrüßungsformel in der Art "Herzlich Willkommen in der barrierefreien Toilette" ausgegeben werden, sowie ein erster Hinweis bzw. Handlungsempfehlung: "Wollen Sie die Tür schließen, so antworten Sie mit 'ja'". Wird in Schritt 15 die Türschließung vom Benutzer betätigt, schließt sich die Tür und es erfolgt eine Ausgabe einer weiteren Information bzw. Handlungsempfehlung an den Benutzer (Schritt 16): "Die Türverriegelung erfolgt automatisch" und/oder "Die Toilette befindet sich gerade vor Ihnen". Erfolgt die Benutzung der Toilette in Schritt 17, wird in Schritt 18 eine Information bzw. Handlungsempfehlung an den Benutzer ausgegeben: "Zum Spülen der Toilette bitte 'Spülen' sagen".

Wird hingegen die Tür einer vorgegebenen Wartezeit nicht gespült (Schritt 19), kann in Schritt 20 eine Wiederholung der Ausgabe ausgegeben werden oder die Toilette automatisch gespült.

Wurde nach Benutzung der Toilette die Spülung betätigt (Schritt 21) wird in Schritt 22 ausgegeben: "Das Waschbecken befindet sich auf Ihrer linken Seite. Das Wasser fließt automatisch, wenn Sie die Hände unter den Wasserhahn halten". Wird das Handwaschwasser betätigt (Schritt 23) wird in Schritt 24 ausgegeben: "Der Seifenspender befindet sich rechts von Ihnen. Handtücher befinden sich vor Ihnen auf der linken Seite", "Desinfektionsmittel befindet sich links neben den Handtüchern". Werden die Handtücher betätigt (Schritt 25) oder wird die Desinfektion betätigt (Schritt 26) folgen die Hinweise in Schritt 27: "Der Ausgang befindet sich auf ihrer rechten Seite. Die Tür ist noch verriegelt. Zur Entriegelung und zur Öffnung der Tür bitte 'Öffnen' sagen". Nach dem Öffnen der Tür in Schritt 28 wird der Benutzer in Schritt 29 verabschiedet: "Tür öffnet. Vielen Dank für Ihren Besuch".

Betätigt unterdessen ein weiterer Gast den außenliegenden Türtaster wird in Schritt 30 ausgegeben: "Diese Toilette ist zur Zeit besetzt Bitte haben Sie einen Augenblick Geduld". Bei einer Verriegelung von außen durch das Bordpersonal kann auch dies dem Benutzer mitgeteilt werden: "Diese Toilette ist derzeit außer Betrieb. Bitte benutzen Sie die Toilette in Wagen X und bitten entschuldigen Sie die Unannehmlichkeit".

## Patentansprüche

1. Fahrzeug des öffentlichen Personenverkehrs mit einer Sanitärzelle mit wenigstens einer elektrisch oder elektronisch betätigbaren Einrichtung und wenigstens einem Mikrofon zur Erfassung von Sprachsignalen eines Benutzers, wobei das Fahrzeug wenigstens eine Steuerungseinheit zur Verarbeitung von Mikrofonsignalen und zur Betätigung der Einrichtung in Abhängigkeit der Mikrofonsignale aufweist, **dadurch gekennzeichnet, dass** die Steuerungseinheit ein Spracherkennungsmodul umfasst, welches geeignet ausgebildet ist, die Mikrofonsignale auszuwerten und Sprachbefehle des Benutzers zu identifizieren und wobei die Sanitärzelle mehrere Lautsprecher zur Ausgabe von akustischen Signalen an den Benutzer aufweist und die Steuerungseinheit ausgebildet ist, die mehreren Lautsprecher zur Ausgabe voneinander
verschiedener akustischer Signale zur Leitung des Benutzers in der Sanitärzelle anzusteuern, wobei jeweils wenigstens ein Lautsprecher einer betätigbaren Einrichtung zugeordnet ist, wobei die Steuerungseinheit ausgebildet ist, die Lautsprecher derart anzusteuern, dass
vorgegebene akustische Signale zur Leitung des Benutzers in der Sanitärzelle ausschließlich von dem wenigstens einen Lautsprecher ausgegeben werden, welcher der Einrichtung zugeordnet ist, zu deren Betätigung der Benutzer geleitet werden soll.

2. Fahrzeug nach Anspruch 1,
**dadurch gekennzeichnet, dass**
das Spracherkennungsmodul eine Datenbank zum Vergleich von identifizierten Sprachbefehlen des Benutzers mit in der Datenbank gespeicherten Informationen aufweist.

3. Fahrzeug nach Anspruch 2,
**dadurch gekennzeichnet, dass**
in der Datenbank Handlungsempfehlungen gespeichert sind, wobei die Steuerungseinheit ausgebildet ist, den Lautsprecher zur Ausgabe von vorgegebenen Handlungsempfehlungen aus der Datenbank in Form von Sprache zur Leitung des Benutzers in der Sanitärzelle anzusteuern.

4. Fahrzeug nach einem der Ansprüche 1 bis 3,
**dadurch gekennzeichnet, dass** die Steuerungseinheit ausgebildet ist zur Auswahl von vorgegebenen akustischen Signalen nach einem vorgegebenen Algorithmus.

5. Fahrzeug nach Anspruch 4,
**dadurch gekennzeichnet, dass**
die Steuerungseinheit eine Zeitmesseinrichtung und/oder ein Empfangsmodul zum Empfang von Statusmeldungen der betätigbaren Einrichtungen aufweist und ausgebildet ist, die Auswahl vorgegebenen akustischen Signale nach dem vorgegebenen Algorithmus in Abhängigkeit einer vorgegebenen Zeitspanne und/oder in Abhängigkeit wenigstens einer Statusmeldung einer der betätigbaren Einrichtungen vorzunehmen.

6. Fahrzeug nach einem der Ansprüche 1 bis 5,
**dadurch gekennzeichnet, dass**
die Steuerungseinheit ausgebildet ist, Fragen an den Benutzer auszugeben, um Sprachsignale des Benutzers auszulösen.

7. Fahrzeug nach einem der Ansprüche 1 bis 6,
**dadurch gekennzeichnet, dass**
sie mehrere Mikrofone umfasst, und die Steuerungseinheit geeignet ausgebildet ist zur Positionsbestimmung des Benutzers in der Sanitärzelle anhand der verschiedenen Mikrofonsignale.

8. Fahrzeug nach einem der Ansprüche 1 bis 7,
**dadurch gekennzeichnet, dass**
das wenigstens eine Mikrofon und/oder der wenigstens eine Lautsprecher für den Benutzer verdeckt angeordnet sind.

9. Fahrzeug nach einem der Ansprüche 1 bis 8,
**dadurch gekennzeichnet, dass**
die Steuerungseinheit ausgebildet ist, Informationen in Abhängigkeit der Position des Benutzers in der Sanitärzelle und/oder in Abhängigkeit einer erfolgten Betätigung einer Einrichtung der Sanitärzelle auszugeben.

10. Verfahren zum Betreiben eines Fahrzeugs nach einem der Ansprüche 1 bis 9,
**dadurch gekennzeichnet, dass**
ein Sprachsignal von einem Benutzer erfasst, erkannt und in einen Steuerungsbefehl für eine Einrichtung der Sanitärzelle umgewandelt wird und, dass akustische Signale zur Leitung des Benutzers in der Sanitärzelle ausgegeben werden, wobei die Sanitärzelle mehrere Lautsprecher aufweist, wobei jeweils wenigstens ein Lautsprecher einer betätigbaren Einrichtung zugeordnet ist, wobei die akustischen Signale zur Leitung des Benutzers in der Sanitärzelle ausschließlich von dem wenigstens einen Lautsprecher ausgegeben werden, welcher der Einrichtung zugeordnet ist, zu deren Betätigung der Benutzer geleitet werden soll.

11. Verfahren nach Anspruch 10,
**dadurch gekennzeichnet, dass**
Handlungsempfehlungen in Form von Sprachsignalen zur Leitung des Benutzers in der Sanitärzelle ausgegeben werden.

12. Verfahren nach einem der Ansprüche 10 oder 11,
**dadurch gekennzeichnet, dass**
die akustischen Signale nach einem vorgegebenen Algorithmus ausgewählt werden.

13. Verfahren nach Anspruch 12,
**dadurch gekennzeichnet, dass**
die akustischen Signale nach dem vorgegebenen Algorithmus in Abhängigkeit von einer vorgegebenen Zeitspanne und/oder in Abhängigkeit wenigstens einen aktuellen Status einer der betätigbaren Einrichtungen ausgewählt werden.

## Claims

1. Public transport vehicle having a sanitary cubicle containing at least one electrically or electronically operable device and at least one microphone to capture voice signals from a user, the vehicle having at least one control unit to process microphone signals and to operate the device on the basis of the microphone signals, **characterized in that** the control unit comprises a voice recognition module that is of suitable design to evaluate the microphone signals and to identify voice commands from the user and wherein the sanitary cubicle has multiple loudspeakers to output audible signals to the user, and the control unit is designed to drive the multiple loudspeakers to output mutually different audible signals to direct the user in the sanitary cubicle, at least one respective loudspeaker being associated with an operable device, the control unit being designed to drive the loudspeakers such that specified audible signals to direct the user in the sanitary cubicle are output exclusively by the at least one loudspeaker associated with the device that the user is intended to be directed to operate.

2. Vehicle according to Claim 1,
**characterized in that**
the voice recognition module has a database to compare identified voice commands from the user with information stored in the database.

3. Vehicle according to Claim 2,
**characterized in that**
the database stores action recommendations, the control unit being designed to drive the loudspeaker to output specified action recommendations from the database in the form of voice to direct the user in the sanitary cubicle.

4. Vehicle according to one of Claims 1 to 3,
**characterized in that** the control unit is designed to select specified audible signals according to a specified algorithm.

5. Vehicle according to Claim 4,
**characterized in that**
the control unit has a timing device and/or a receiving module to receive status reports from the operable devices and is designed to select the specified audible signals according to the specified algorithm on the basis of a specified period of time and/or on the basis of at least one status report from one of the operable devices.

6. Vehicle according to one of Claims 1 to 5,
**characterized in that**
the control unit is designed to output questions to the user in order to trigger voice signals from the user.

7. Vehicle according to one of Claims 1 to 6,
**characterized in that**
it comprises multiple microphones, and the control unit is of suitable design to determine the position of the user in the sanitary cubicle on the basis of the different microphone signals.

8. Vehicle according to one of Claims 1 to 7,
**characterized in that**
the at least one microphone and/or the at least one loudspeaker are arranged in a manner concealed from the user.

9. Vehicle according to one of Claims 1 to 8,
**characterized in that**
the control unit is designed to output information on the basis of the position of the user in the sanitary cubicle and/or on the basis of a device of the sanitary cubicle having been operated.

10. Method for operating a vehicle according to one of Claims 1 to 9,
**characterized in that**
a voice signal from a user is captured, recognized and converted into a control command for a device of the sanitary cubicle and **in that** audible signals are output to direct the user in the sanitary cubicle, wherein the sanitary cubicle has multiple loudspeakers, at least one respective loudspeaker being associated with an operable device, the audible signals to direct the user in the sanitary cubicle being output exclusively by the at least one loudspeaker associated with the device that the user is intended to be directed to operate.

11. Method according to Claim 10,
**characterized in that**
action recommendations in the form of voice signals are output to direct the user in the sanitary cubicle.

12. Method according to either of Claims 10 and 11,
**characterized in that**
the audible signals are selected according to a specified algorithm.

13. Method according to Claim 12,
**characterized in that**
the audible signals are selected according to the specified algorithm on the basis of a specified period of time and/or on the basis of at least one present status of one of the operable devices.

## Revendications

1. Véhicule du transport public des personnes comprenant un module sanitaire ayant au moins un dispositif pouvant être actionné électriquement ou électroniquement et au moins un microphone de détection de signaux vocaux d'un utilisateur, dans lequel le véhicule a au moins une unité de commande pour le traitement de signaux de microphone et pour l'actionnement du dispositif en fonction des signaux de microphone, **caractérisé en ce que** l'unité de commande comprend un module de reconnaissance de la voix, qui est constitué de manière propre à exploiter des signaux de microphone et à identifier des instructions vocales de l'utilisateur et dans lequel le module sanitaire a plusieurs haut-parleurs d'envoi de signaux acoustiques à l'utilisateur et l'unité de commande est constituée pour commander les plusieurs haut-parleurs pour l'envoi de signaux acoustiques différents des uns des autres pour le guidage de l'utilisateur dans le module sanitaire,
dans lequel respectivement
au moins un haut-parleur est affecté à un dispositif pouvant être actionné, dans lequel l'unité de commande est constituée pour commander les haut-parleurs, de manière à ce que des signaux acoustiques donnés à l'avance pour le guidage de l'utilisateur dans le module sanitaire soient donnés exclusivement par le au moins un haut-parleur, qui est affecté au dispositif, pour l'actionnement duquel l'utilisateur doit être guidé.

2. Véhicule suivant la revendication 1,
**caractérisé en ce que**
le module de reconnaissance de la voix a une base de données pour la comparaison d'instructions vocales identifiées de l'utilisateur à des informations mises en mémoire dans la base de données.

3. Véhicule suivant la revendication 2,
**caractérisé en ce que**
des instructions de manipulation sont mises en mémoire dans la base de données, dans lequel l'unité de commande est constituée pour commander l'envoi de recommandations de manipulation données à l'avance de la base de données sous la forme de parole pour le guidage de l'utilisateur dans le module sanitaire.

4. Véhicule suivant l'une des revendications 1 à 3,
**caractérisé en ce que** l'unité de commande est constituée pour la sélection de signaux acoustiques données à l'avance suivant un algorithme donné à l'avance.

5. Véhicule suivant la revendication 4,
**caractérisé en ce que**
l'unité de commande a un dispositif de mesure du temps et/ou un module de réception pour la réception de messages de statut des dispositifs pouvant être actionnés et est constituée, de manière à effectuer la sélection de signaux acoustiques données à l'avance suivant l'algorithme donné à l'avance en fonction d'un laps de temps donné à l'avance et/ou en fonction d'au moins un message de statut de l'un des dispositifs pouvant être actionnés.

6. Véhicule suivant l'une des revendications 1 à 5,
**caractérisé en ce que**
l'unité de commande est constituée pour envoyer des questions à l'utilisateur afin de déclencher des signaux vocaux de l'utilisateur.

7. Véhicule suivant l'une des revendications 1 à 6,
**caractérisé en ce qu'**
il comprend plusieurs microphones et l'unité de commande est constituée, d'une manière propre à la détermination de la position de l'utilisateur dans le module sanitaire à l'aide des divers signaux de microphones.

8. Véhicule suivant l'une des revendications 1 à 7,
**caractérisé en ce que**
le au moins un microphone et/ou le au moins un haut-parleur sont disposés en étant dissimulés à l'utilisateur.

9. Véhicule suivant l'une des revendications 1 à 8,
**caractérisé en ce que**
le dispositif de commande est constitué pour envoyer des informations en fonction de la position de l'utilisateur dans le module sanitaire et/ou en fonction d'un actionnement effectué d'un dispositif du module sanitaire.

10. Procédé pour faire fonctionner un véhicule suivant l'une des revendications 1 à 9,
**caractérisé en ce que**
un signal vocal est détecté par un utilisateur, reconnu et transformé en une instruction de commande d'un dispositif du module sanitaire et **en ce que** des signaux acoustiques pour le guidage de l'utilisateur sont envoyés dans le module sanitaire, dans lequel le module sanitaire a plusieurs haut-parleurs, dans lequel respectivement au moins un haut-parleur est affecté à un dispositif pouvant être actionné, dans lequel les signaux acoustiques pour le guidage de l'utilisateur dans le module sanitaire sont envoyés exclusivement par le au moins un haut-parleur, qui est affecté au dispositif, pour l'actionnement duquel l'utilisateur doit être guidé.

11. Procédé suivant la revendication 10,
**caractérisé en ce que**
des recommandations de manipulation sous la forme de signaux vocaux pour le guidage de l'utilisateur sont envoyés dans le module sanitaire.

12. Procédé suivant l'une des revendications 10 ou 11,
**caractérisé en ce que**
les signaux acoustiques sont sélectionnés suivant un algorithme donné à l'avance.

13. Procédé suivant la revendication 12,
**caractérisé en ce que**
les signaux acoustiques sont choisis suivant l'algorithme donné à l'avance, en fonction d'un laps de temps donné à l'avance et/ou en fonction d'au moins un statut en cours de l'un des dispositifs pouvant être actionnés.
